# EUROPEAN PATENT APPLICATION

(11) **EP 3 932 542 A1**
(43) Date of publication of application: **05.01.2022**
(21) Application number: 20184000.6
(22) Date of filing: 03.07.2020
(51) Int. Cl.: B01J 23/34, B01D 53/94, B01J 23/745, B01J 23/889, B01J 35/02, B01J 37/00

(54) **CATALYST FOR PARTICULATE COMBUSTION IN GASOLINE EMISSION TREATMENT SYSTEMS**

(71) Applicant: BASF Corporation, Florham Park, NJ 07932 (US)
(72) Inventor: DUMBUYA, Karifala, 30173 Hannover (DE); SCHMITZ, Thomas, 30173 Hannover (DE); WALTZ, Florian, 30173 Hannover (DE); SIEMUND, Stephen, 30173 Hannover (DE); SCHWEKENDIEK, Holger, 30173 Hannover (DE)
(74) Representative: Finnegan Europe LLP

(57) **Abstract**

A catalyst for particulate combustion which is essentially free of platinum group metal compounds comprising carrier and at least one metal oxide selected from iron oxide and manganese oxide, wherein said carrier is one or more of alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria.

## Description

### Technical Field

The present invention relates to a catalyst for particulate combustion in gasoline emission treatment systems and method for their manufacture. The catalyst in the present invention is coated onto a gasoline particulate filter to oxidize particulate trapped in the filter.

### Background

Particulate emissions for gasoline engines are being subject to regulations, including Euro 6 (2014) standards. Certain gasoline direct injection engines have been developed whose operating regimes result in the formation of fine particulates. Gasoline emission treatment system needs to achieve particulate standards. In contrast to particulates generated by diesel lean burning engines, the particulates generated by gasoline engines tend to be finer and in lesser quantities. This is due to the different combustion conditions of a diesel engine as compared to a gasoline engine. For example, gasoline engines run at a higher temperature than diesel engines. Also, hydrocarbon components are different in the emissions of gasoline engines as compared to emissions of diesel engines.

Emissions of unburned hydrocarbons, carbon monoxide and nitrogen oxide contaminants continue to be regulated. Catalytic converters containing a three-way conversion catalyst (TWC) are accordingly located in the exhaust gas line of internal combustion engines. Such catalysts promote the oxidation by oxygen in the exhaust gas stream of unburned hydrocarbons and carbon monoxide as well as the reduction of nitrogen oxides to nitrogen.

Exhaust gases from gasoline engine may be passed through a gasoline particulate filter (GPF) coated with catalyst washcoat to remove particulate before the exhaust gases are emitted into the atmosphere.

U.S. Patent 8,173,087 provides TWC catalysts or oxidation catalysts, coated onto particulate traps such as soot filters. More specifically, it is directed to a soot filter having a catalytic material prepared using two coats: an inlet coat and an outlet coat. The TWC catalyst composite contains palladium and rhodium or platinum and palladium.

U.S. Patent 7,977,275 relates to a particulate filter having a catalytic coating which contains two catalysts arranged one behind the other. The first catalyst is located in the gas inlet region of the filter and contains a palladium/platinum catalyst, the second catalyst is arranged downstream of the first catalyst and preferably contains platinum alone as catalytically active component, which provides a combination of platinum and palladium to provide optimum properties in terms of resistance to ageing and sulphur poisoning.

However, using the platinum group metal (PGM) like platinum and/or palladium significantly increases the cost of the catalyst. Therefore, it is desirable to provide a catalyst that remove particulate from the gasoline emission which is essentially free of PGM while achieving similar performance to PGM containing catalyst.

Interestingly, within the framework of this invention, catalysts essentially free of PGM and comprising at least one metal oxide selected from iron oxide, manganese oxide or a mixture thereof have particularly similar, or even favorable properties in removing particulate from the exhaust stream compared with conventional PGM containing catalyst.

### Summary of the Invention

An object of the present invention is to provide a catalyst essentially free of PGM to remove particulate from gasoline emissions.

A first aspect of the invention provides a catalyst essentially free of PGM to oxidize and remove particulate from the gasoline emission.

A second aspect of the invention provides a process for preparing the catalyst of the present invention coated on a GPF.

A third aspect of the invention provides a particulate filter comprising the catalyst of the present invention.

A fourth aspect of the invention provides a gasoline engine exhaust gas purification system comprising the particulate filter of the present invention.

### Brief Description of the Figures

Figure 1 shows the particulate oxidation activities (oxygen Pre and Tailpipe) of Example 1 after soot loading (Diesel soot, 4.5 g/L) using a diesel particle generator (DPG) and engine testing using the drop-to-idle (DTI) test protocol at inlet trigger temperatures of 500, 550, 600 and 650 °C on a gasoline engine.
Figure 2 shows the particulate oxidation activities (oxygen Pre and Tailpipe) of Example 2 after soot loading (Diesel soot, 4 g/L) using a DPG and engine testing using the DTI test protocol at inlet trigger temperatures of 500 and 550 °C on a gasoline engine.
Figure 3 shows the particulate oxidation activities (oxygen Pre and Tailpipe) of Example 3 under fresh and oven-aged (850 °C hydrothermal,16 hours) conditions after soot loading (Diesel soot, 4 g/L) using a DPG and engine testing using the DTI test protocol at inlet trigger temperatures of 500°C on a gasoline engine.
Figure 4 shows the particulate oxidation activities (oxygen Pre and Tailpipe) of Example 4 after soot loading (Diesel soot, 3.5 g/L) using a DPG and engine testing using the DTI test protocol at inlet trigger temperatures of 500 and 550 °C for fresh catalyst and at inlet trigger temperatures of 550 and 600 °C for oven-aged (850 °C hydrothermal,16 hours) catalyst on a gasoline engine.
Figure 5 shows the particulate oxidation activities (oxygen Pre and Tailpipe) of Example 5 after soot loading (Gasoline soot, 3.6 g/L) using a 2I TGDI engine followed by DTI test protocol at inlet trigger temperatures of 600 and 650 °C on another 2I GDI gasoline engine.
Figure 6 shows the particulate oxidation activities (oxygen Pre and Tailpipe) of Example 6 after soot loading (Gasoline soot, 4.3 g/L) using a 2I TGDI engine followed by DTI test protocol at inlet trigger temperatures of 600 and 650 °C on another 2I GDI gasoline engine.

### Detailed Description of the Invention

The following terms, used in the present description and the appended claims, have the following definitions:
Expressions "a", "an", "the", when used to define a term, include both the plural and singular forms of the term.

All percentages and ratios are mentioned by weight unless otherwise indicated.

"TWC" refers to a three-way catalyst that can substantially eliminate HC, CO and NOₓ from gasoline engine exhaust gases. Typically, a TWC essentially consists of one or more platinum-group metals (PGMs), alumina as support material, and cerium-zirconium oxide as both an oxygen storage component and a support material coated on ceramic or metallic substrate.

"GPF" refers to a gasoline particulate filter.

"PGM" refers to platinum group metal, while "Pt" refers to platinum, "Pd" refers to palladium, and "Rh" refers to rhodium. It is to be understood that these terms embrace not only the metallic form of these PGMs, but also any metal oxide forms that are catalytically active for emissions reduction.

A first aspect of the invention provides a catalyst essentially free of PGM comprising carrier and at least one metal oxides selected from iron oxide, manganese oxide or mixture thereof.

In one or more preferred embodiments, the catalyst in this invention comprises about 5-90 wt.%, preferably 10-80wt.%, more preferably 30-70wt.%, most preferably 30-60 wt.% of carrier, based on the calcined weight of the catalyst.

In one or more preferred embodiments, the catalyst in this invention comprises about 0-95 wt.%, preferably 5-90wt.%, more preferably 10-70wt.%, most preferably 10-50 wt.% of iron oxide, based on the calcined weight of the catalyst.

In one or more preferred embodiments, the catalyst in this invention comprises about 0-90 wt.%, preferably 0-80wt.%, more preferably 20-60wt.%, most preferably 30-60 wt.% of manganese oxide, based on the calcined weight of the catalyst.

In one or more preferred embodiments, the catalyst in this invention comprises about 10-80wt.% of carrier, about 5-90 wt.% of iron oxide and about 0-80 wt.% of manganese oxide, based on the calcined weight of the catalyst.

In one or more preferred embodiments, the catalyst in this invention comprises about 20-70wt.% of carrier, about 10-70 wt.% of iron oxide and about 20-60 wt.% of manganese oxide, based on the calcined weight of the catalyst.

In one or more preferred embodiments, the catalyst in this invention comprises about 30-60wt.% of carrier, about 10-50 wt.% of iron oxide, and about 20-60 wt.% of manganese oxide, based on the calcined weight of the catalyst.

As used in this specification and the appended claims, the term "substantially free of PGM" means that PGM are not intentionally added to an amount greater than about 0.5 wt.% of the catalyst material. In more specific embodiments, the term "substantially free of PGM" means that PGM make up less than about 0.1wt.% of the catalyst material. In more specific embodiments, the term "substantially free of PGM" means that PGM make up less than about 0.01 wt.% of the catalyst material.

A second aspect of the invention provides a process for preparing the catalyst of the present invention, which comprising the steps of:
a) providing a washcoat slurry via impregnating the surface of carrier with particles comprising iron oxide and/or manganese oxide, optionally diluting and/or mixing with one or more other components;
b) coating the pores and/or surface of the porous internal walls of a GPF with the washcoat slurry prepared in step a) and optionally dry the coated GPF under a temperature of 100-150°C; and
c) calcinating the coated GPF prepared in step b) under a temperature of 300-500 °C, preferably 350-450°C.

In another embodiment, the invention provides a process for preparing the catalyst of the present invention, which comprising the steps of:
a) providing a mixture of carrier and particles comprising iron oxide and/or manganese oxide using a slurry process, optionally mixing with one or more other components;
b) dry coating the channels and/or pores of the porous internal walls of the GPF with jet-milled mixture prepared in step a).

In one or more preferred embodiments, the carrier in step a) of above processes comprising one or more of materials selected from alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria; preferably one or more of materials selected from alumina, zirconia-alumina, ceria, alumina, zirconia-alumina; more preferably alumina.

In one or more preferred embodiments, the carrier in step a) of above processes is a high surface area carrier, preferably with surface area of 50-500 m²/g, preferably 100-400 m²/g, more preferably 100-200 m²/g

In one or more preferred embodiments, the processes for preparing the catalyst of the present invention in step a) further comprises milling the slurry to reduce the mean particle size of the particles. In specific embodiments, the slurry is milled to reduce the particle size distribution so that the volume-based mean particle size D90 is in the range of about 2 to 25 µm, preferably 2 to 20 µm, more preferably 3 to 18 µm, and most preferably 3 to 16 µm depending on whether in-wall or partial on-wall application is desired.

In another embodiment, the invention provides a process for preparing the catalyst of the present invention, which comprising the steps of:
a) providing a washcoat slurry via impregnating the surface of carrier with particles comprising iron oxide and/or manganese oxide, optionally diluting and/or mixing with one or more other components;
b) coating the pores and/or surface of the porous internal walls of the GPF with the washcoat slurry prepared in step a) and optionally dry the coated GPF under a temperature of 100-150°C, preferably coating on the surface of the porous internal walls of the outlet of GPF; and
c) calcinating the coated GPF prepared in step b) under a temperature of 300-500 °C, preferably 350-450°C.
d) providing a mixture of carrier and particles comprising iron oxide and/or manganese oxide using a slurry process, optionally mixing with one or more other components;
e) dry coating the channels and/or pores of the porous internal walls of the GPF obtained in step c) with jet-milled mixture prepared in step d), preferably the dry coating is coated in the inlet of the GPF obtained in step c).

Typically, the GPF comprises alternatingly closed channels that force the exhaust gas flow through porous walls, a ceramic wall-flow filter, a wire mesh filter, a ceramic or SiC foam filter, etc. Preferably, the GPF is a porous wall flow filter comprising an inlet end, an outlet end, a substrate axial length extending between the inlet end and the outlet end, and a plurality of passages defined by porous internal walls of the porous wall flow filter substrate, wherein the plurality of passages comprise inlet passages having an open inlet end and a closed outlet end, and outlet passages having a closed inlet end and an open outlet end; wherein in the pores of the porous internal walls and on the surface of the porous internal walls, which surface defines the interface between the porous internal walls and the passages. When the catalyst is coated in the pores of the porous internal walls, the catalyst is present as in-wall coating; and when the catalyst is coated on the surface of the porous internal walls, the catalyst is present as on-wall coating.

In the context of the present invention, the term "the surface of the porous internal walls" is to be understood as the surface of the walls, i.e. the surface of the walls in an untreated state which consists, apart from any unavoidable impurities with which the surface may be contaminated, of the material of the walls.

In one or more preferred embodiments, the catalyst in the present invention comprises no further coating in the pores of the porous internal walls and no further coating on the surface of the porous internal walls.

In one or more preferred embodiments, the GPF has a substantially uniform mean pore size. In the context of the present invention, the term "substantially uniform mean pore size" means that the mean pore size across the wall does not vary by more than a factor of 10.

In specific embodiments, the GPF has an average pore size in the range of about 3 µm and about 35 µm, preferably about 5 µm and about 30 µm, more preferably about 5 µm and about 25 µm, most preferably about 8 µm and about 22 µm. In specific embodiments, the mean pore size is effective to allow build-up of soot on the inlet side of the filter wall. In some specific embodiments, the mean pore size is effective to allow some soot to enter the pores on the inlet surface of the porous walls.

In one embodiment, the average porosity of the internal walls of GPF is in the range of 20 to 75%, preferably 30 to 70%, more preferably 40 to 65 %.

Typically, the catalysts of the invention are coated onto a GPF at a loading in the range of at least about 5 g/L, about 10 g/L, about 15 g/L, about 20 g/L, about 25 g/L or about 30 g/L up to about 150 g/L, about 175 g/L, about 200 g/L, about 225 g/L, about 250 g/L about 275 g/L, about 300 g/L or about 325 g/L. It is to be understood that each lower endpoint and each higher endpoint disclosed in the foregoing may be combined to form a catalyst loading range that is expressly contemplated by the invention. In certain exemplary embodiments, the catalyst loading is in the range of about 20 g/L to 300 g/L, preferably about 30 g/L to 200 g/L.

In one embodiment, the catalyst of the present invention is a fresh catalyst, i.e. a catalyst which had not been exposed to a treatment of an exhaust gas stream of a gasoline engine.

In another embodiment, the catalyst of the present invention is an aged catalyst which is treated in oven under temperature of about 600 to 1050°C, preferably higher than 700 to 1050°C, more preferably 800°C to 1050°C.

In one embodiment, the catalyst of the present invention could be present as on-wall coating only, in-wall coating only or both on-wall and in-wall coating. For catalyst being present as both on-wall and in-wall coating, the loading ratio of on-wall and in-wall coating is in the range of from 1:99 to 99:1, preferably in the range of from 5:95 to 95:5, more preferably in the range of from 20:80 to 80:20, more preferably in the range of from 30:70 to 70:30, most preferably in the range of from 40:60 to 60:40.

In the context of the present invention, the porous internal walls of GPF comprising the in-wall coating preferably have a relative average porosity in the range of from 20 to 99 %, more preferably in the range of from 50 to 98 %, more preferably in the range of from 50 to 75%, wherein the relative average porosity is defined as the average porosity of the internal walls comprising the in-wall coating relative to the average porosity of the internal walls not comprising the in-wall coating.

It is preferred that the porous internal walls of the GPF comprising the in-wall coating have a relative average pores size in the range of from 3 to 30 µm, more preferably in the range of from 3 to 25 µm, most preferably in the range of from 5 to 20 µm.

According to the present invention, it is preferred that the GPF comprises the catalytic coating at an inlet coating length of x % of the substrate axial length, wherein 0 ≤ x ≤ 100, preferably 50 ≤ x ≤ 100, more preferably 75 ≤ x ≤ 100, more preferably 90 ≤ x ≤ 100, more preferably 95 ≤ x ≤ 100, more preferably 99 ≤ x ≤ 100; and that the wall flow filter substrate comprises the catalytic coating at an outlet coating length of y % of the substrate axial length, wherein 0 ≤ y ≤ 100, preferably 50 ≤ y ≤ 100, more preferably 75 ≤ y ≤ 100, more preferably 90 ≤ y ≤ 100, more preferably 95 ≤ y ≤ 100, more preferably 99 ≤ y ≤ 100; wherein x + y > 0.

Alternatively, more preferably 10 ≤ x ≤ 90, more preferably 20 ≤ x ≤ 80, more preferably 30 ≤ x ≤ 70, more preferably 40 ≤ x ≤ 60, more preferably 45 ≤ x ≤ 55; and more preferably 10 ≤ y ≤ 90, more preferably 20 ≤ y ≤ 80, more preferably 30 ≤ y ≤ 70, more preferably 40 ≤ y ≤ 60, more preferably 45 ≤ y ≤ 55.

In one or more preferred embodiments, the catalyst of the invention is coated on the inlet channel of the GPF only.

The calcination temperature in step c) could be from 300 to 600°C, preferably 300 to 500°C, more preferably 350 to 450°C. The calcination period may be from 10 minutes to 10 hours, preferably 0.5 hour to 8 hours, more preferably 1 hour to 4 hours.

A third aspect of the invention provides a particulate filter comprising the catalyst of the present invention.

A fourth aspect of the invention provides a gasoline engine exhaust gas purification system comprising the particulate filer of the present invention.

In certain embodiments, gasoline engine exhaust is passed through a GPF coated with a catalyst of this invention at a space velocity of, for example, up to 80,000 hr⁻¹.

In one embodiment, the gasoline engine exhaust gas purification system further comprises of at least one TWC. Preferably said TWC locates at close-couple position and the particulate filter locates in the downstream of said TWC. More preferably, said TWC comprising Pd, Rh and optionally Pt.

In one aspect, the present invention provides the following exemplary embodiments.
1. A catalyst for particulate combustion, wherein said catalyst is essentially free of platinum group metal compounds and comprising carrier and at least one metal oxides selected from iron oxide, manganese oxide or mixture thereof.
2. A catalyst for particulate combustion according to embodiment 1, characterized in that said catalyst comprising 5-90 wt.%, preferably 10-80wt.%, more preferably 30-70wt.%, most preferably 30-60 wt.% carrier, based on the calcined weight of the catalyst.
3. A catalyst for particulate combustion according to any of embodiments 1 or 2, characterized in that said catalyst comprising 0-95 wt.%, preferably 5-90wt.%, more preferably 10-70wt.%, most preferably 10-50 wt.% iron oxide, based on the calcined weight of the catalyst.
4. A catalyst for particulate combustion according to any of embodiments 1 to 3, characterized in that said catalyst comprising 0-90 wt.%, preferably 0-80wt.%, more preferably 20-60wt.%, most preferably 30-60 wt.% manganese oxide, based on the calcined weight of the catalyst.
5. A catalyst for particulate combustion according to any of embodiments 1 to 4, characterized in that said carrier is one or more of materials selected from alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria; preferably one or more of materials selected from alumina, zirconia-alumina, ceria, alumina, zirconia-alumina; more preferably alumina.
6. A catalyst for particulate combustion according to any of embodiments 1 to 5, characterized in that said catalyst comprising 10-50 wt.% iron oxide, 30-60 wt.% carrier, 20-60 wt.% manganese oxide, based on the calcined weight of the catalyst.
7. A catalyst for particulate combustion according to any of embodiments 1 to 6, characterized in that it is prepared by a process comprising the steps of:
   a) providing a washcoat slurry via impregnating the surface of carrier with particles comprising iron oxide and/or manganese oxide, optionally diluting and/or mixing with one or more other components;
   b) coating the pores and/or surface of the porous internal walls of the GPF with the washcoat slurry prepared in step a) and optionally dry the coated GPF under a temperature of 100-150°C; and
   c) calcinating the coated GPF prepared in step b) under a temperature of 300-500 °C, preferably 350-450°C.
8. A catalyst for particulate combustion according to any of embodiments 1 to 6, characterized in that it is prepared by a process comprising the steps of:
   a) providing a mixture of carrier and particles comprising iron oxide and/or manganese oxide using a slurry process, optionally mixing with one or more other components;
   b) dry coating the channels and/or pores of the porous internal walls of the GPF with jet-milled mixture prepared in step a).
9. A catalyst for particulate combustion according to any of embodiments 1 to 6, characterized in that it is prepared by a process comprising the steps of:
   a) providing a washcoat slurry via impregnating the surface of carrier with particles comprising iron oxide and/or manganese oxide, optionally diluting and/or mixing with one or more other components;
   b) coating the pores and/or surface of the porous internal walls of the GPF with the washcoat slurry prepared in step a) and optionally dry the coated GPF under a temperature of 100-150°C, preferably coating on the surface of the porous internal walls of the outlet of GPF;
   c) calcinating the coated GPF prepared in step b) under a temperature of 300-500 °C, preferably 350-450°C.
   d) providing a mixture of carrier and particles comprising iron oxide and/or manganese oxide using a slurry process, optionally mixing with one or more other components; and
   e) dry coating the channels and/or pores of the porous internal walls of the GPF obtained in step c) with jet-milled mixture prepared in step d), preferably the dry coating is coated in the inlet of the GPF obtained in step c).
10. A catalyst for particulate combustion according to any of embodiments 7 to 9, characterized in that D90 of said particles comprising iron oxide and/or manganese oxide is 2 to 20 µm, preferably 2 to 18 µm, more preferably 3 to 15 µm, most preferably 5 to 13 µm.
11. A catalyst for particulate combustion according to any of embodiments 7 to 10, characterized in that said GPF comprising an inlet end, an outlet end, a substrate axial length extending between the inlet end and the outlet end, and a plurality of passages defined by porous internal walls of the porous wall flow filter substrate, wherein the plurality of passages comprise inlet passages having an open inlet end and a closed outlet end, and outlet passages having a closed inlet end and an open outlet end;
12. A catalyst for particulate combustion according to any of embodiments 7 to 11, characterized in that said carrier is one or more of materials selected from alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria; preferably one or more of materials selected from alumina, zirconia-alumina, ceria, alumina, zirconia-alumina; more preferably alumina.
13. A catalyst for particulate combustion according to any of embodiments 1 to 12, characterized in that said carrier has surface area 50-500 m²/g, preferably 100-400 m²/g, more preferably 100-200 m²/g.
14. A particulate filter for filtering out particulate present in the exhaust gases of an internal combustion engine, characterized in that said particulate filter comprising a catalyst according to any one of embodiments 1 to 13.
15. A particulate filter according to embodiment 14, characterized in that the catalyst according to any one of embodiments 1 to 12 is coated at the inlet channels of the particulate filter.
16. A particulate filter according to embodiments 14 or 15, characterized in that said catalyst is coated onto the particulate filter along the whole of or part of its axial length or radial direction, on alternating channels, on a wall or in a porous wall, or a combination thereof
17. A particulate filter according to any one of embodiments 13 to 16, wherein the particulate filter comprises a wall-flow filter comprising a honeycomb structure.
18. A particulate filter according to any one of embodiments 13 to 17, wherein the mean pore size of particulate filter is from 10 to 24 µm, preferably 14 to 20 µm.
19. A particulate filter according to any one of claims 13 to 18, wherein the porosity of the particulate filter is 40-65%.
20. A gasoline engine exhaust gas purification system wherein said exhaust gas purification system comprises the particulate filter according to any one of embodiments 13 to 19, and at least one TWC, preferably said TWC locates at close-couple position and said particulate filter locates in the downstream of said TWC.
21. A gasoline engine exhaust gas purification system according to embodiment 20, wherein said TWC comprising Pd, Rh and optionally Pt.

### Examples

The following examples are provided to illustrate the invention, but by no means are a limitation to the invention.

The average porosity of the porous wall-flow substrate was determined by mercury intrusion using mercury porosimeter according to DIN 66133 and ISO 15901-1.

The slurry dynamic viscosities were measured with a HAAKE Rheostress 6000 manufactured by Thermo Fisher Scientific. Values reported here are measured at a shear rate of 300 1/s. Viscosity was measured at 20°C.

The D90 particle size distributions were determined by a static light scattering method using Sympatec HELOS (3200) & QUIXEL equipment, wherein the optical concentration of the sample was in the range of from 6 to 10 %.

The Filter used in the Examples 1 to 6 are medium to high porosity filters, see the specification under the Examples 1-6.
Example 1: Bare filter of Corning LP 1.0 (cylindrically shaped of 6.43 inches x 6 inches, 200 cells per square inch, wall thickness of 8 mil; porosity of 55% and mean pore size of 14 µm)
Example 2: Slurry was prepared by adding alumina (with surface area 150 m²/g) in distilled water with stirring for 10 minutes, followed by adding manganese oxide and pH adjustment with diluted nitric acid to adjust pH to 5-6. The prepared mixture was milled at solid content of 38% to have the particles with D90 of 5 µm, followed by final pH adjustment with diluted nitric acid to the range 5-6. High porosity filter NGK C-810 (cylindrically shaped of 4.66 inches x5 inches, 300 cells per square inch, wall thickness of 8 mil, porosity of 65% and mean pore size of 20 µm) was coated in the pores of the porous internal walls with above obtained slurry washcoat. The coated filter was dried at 120 °C for 2 hours, then calcined at 400 °C in an oven to obtain the fresh catalyst with weight ratio of alumina to manganese oxide is 1:1 and the dried washcoat in amount of 60 g/L (1 g/in³).
Example 3: Slurry was prepared by adding alumina (with surface area 150 m²/g) in distilled water with stirring for 10 minutes, followed by adding manganese oxide and pH adjustment with dilute nitric acid to adjust pH to 5-6. The prepared mixture was milled at solid content of 38% to have the particles with D90 of 13 µm, followed by final pH adjustment diluted nitric acid to adjust pH o 5-6. Medium Porosity filter NGK-C780 (cylindrically shaped of 5.2 inches x 4.7 inches, 200 cells per square inch, wall thickness of 8 mil, porosity of 55% and mean pore size of 9 µm) was coated in the pores and on the surface of the porous internal walls with above obtained slurry washcoat. The coated filter was dried at 120 °C for 2 hours, then calcined at 400 °C in an oven to obtain the fresh catalyst with weight ratio of alumina to manganese oxide is 1:1 and the dried washcoat in amount of 30 g/L (0.5 g/in³). The fresh catalyst was further aged under 850 °C for 16 hours to obtain the aged catalyst.
Example 4: A mixture of alumina (with surface area 150 m²/g) and manganese oxide were jet-milled to D90 of 8µm. The jet-milled mixture was applied in a dry coating process to populate the surface of the porous internal walls of high porosity filter Corning HP 1.1 (cylindrically shaped of 4.66 inches x 5 inches, 300 cells per square inch, wall thickness of 8 mil, porosity of 65% and mean pore size of 17 µm) to obtain the fresh catalyst with weight ratio of alumina to manganese oxide is 1:1 and the dried washcoat in amount of 15g/L (0.25 g/in³). The fresh catalyst was further aged under 850 °C for 16 hours to obtain the aged catalyst.
Example 5: Slurry was prepared by adding alumina (with surface area 150 m²/g) in distilled water with stirring for 10 minutes, followed by adding iron nitrate nonahydrate crystal with stirring for 10 minutes, then manganese oxide was added slowly to the alumina-iron nitrate mixture and followed by pH adjustment with diluted nitric acid to adjust pH to 5-6. The prepared mixture was milled at solid content of 38% to have the particles with D90 of 5 µm, followed by final pH adjustment with diluted nitric acid to adjust pH o 5-6. Corning HP 1.1 (cylindrically shaped of 4.66 inches x 5 inches, 300 cells per square inch, wall thickness of 8 mil, porosity of 65% and mean pore size of 17 µm) was coated in the pores of the porous internal walls with above obtained slurry washcoat. The coated filter was dried at 120 °C for 2 hours, then calcined at 400 °C in an oven to obtain the fresh catalyst with weight ratio of alumina: manganese oxide: iron oxide is 5:4:1 and the dried washcoat in amount of 60 g/L (1 g/in³).
Example 6: Slurry was prepared by adding alumina (with surface area 150 m²/g) in distilled water with stirring for 10 minutes, followed by adding iron nitrate nonahydrate crystal with stirring for 10 minutes, and followed by pH adjustment with diluted nitric acid to adjust pH to 5-6. The prepared mixture was milled at solid content of 38% to have the particles with D90 of 5 µm, followed by final pH adjustment with diluted nitric acid to adjust pH o 5-6. Corning HP 1.1 (cylindrically shaped of 4.66 inches x 5 inches, 300 cells per square inch, wall thickness of 8 mil, porosity of 65% and mean pore size of 17 µm) was coated in the pores of the porous internal walls with above obtained slurry washcoat. The coated filter was dried at 120 °C for 2 hours, then calcined at 400 °C in an oven to obtain the fresh catalyst with weight ratio of alumina: iron oxide is 3:1 and the dried washcoat in amount of 60 g/L (1 g/in³).

Evaluation: Prior to evaluation on engine, the samples prepared in Examples 1 to 6 were loaded with soot respectively and evaluated on a DPG or 2 Liter TGDI engine running at 2,500 rpm under full duty work conditions.

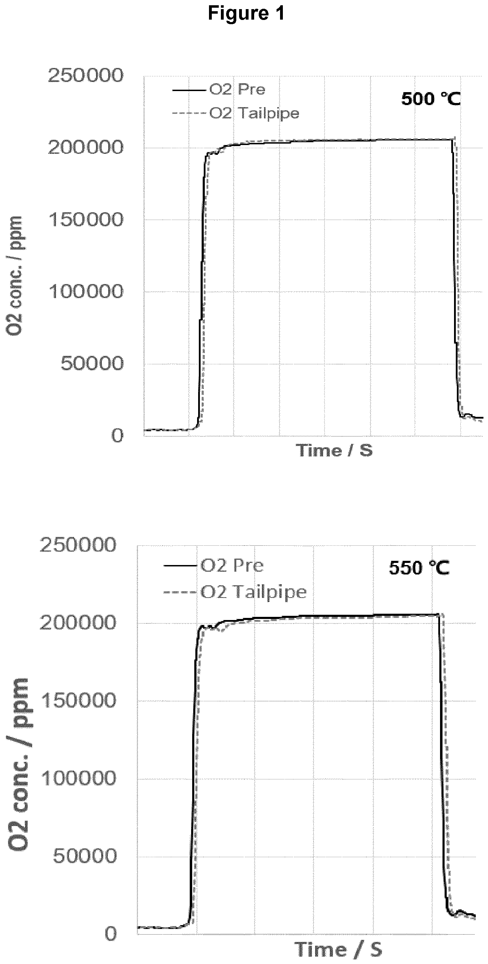

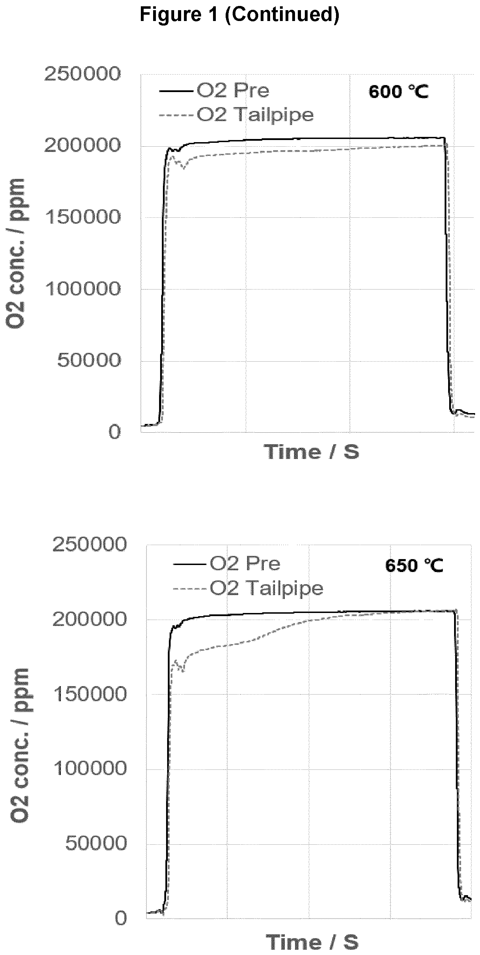

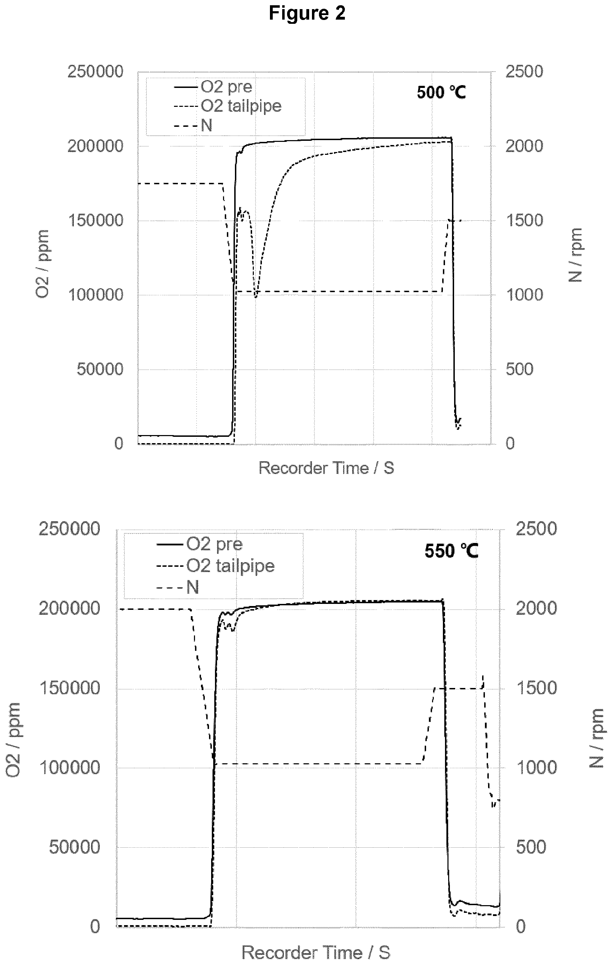

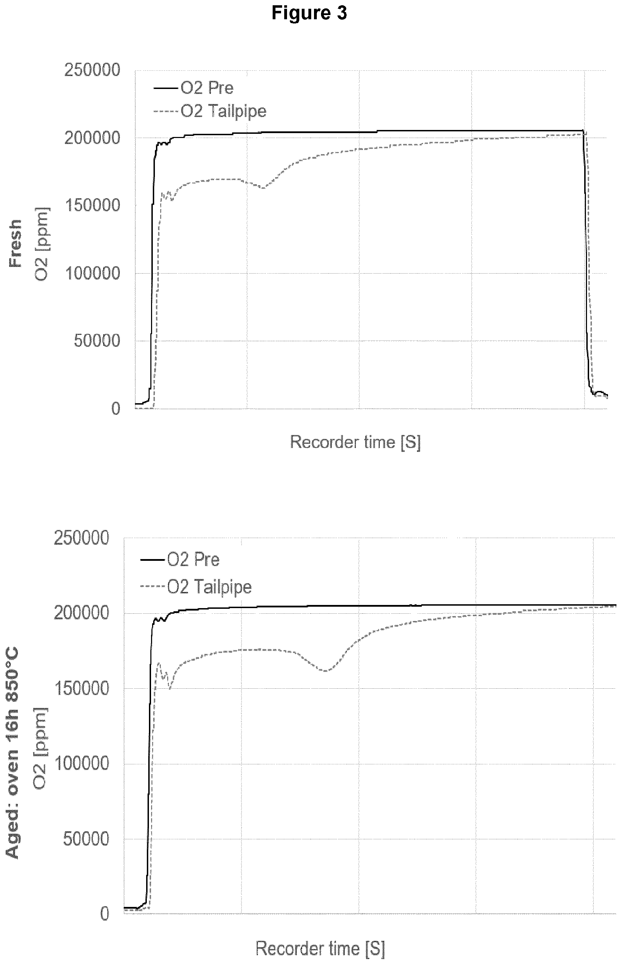

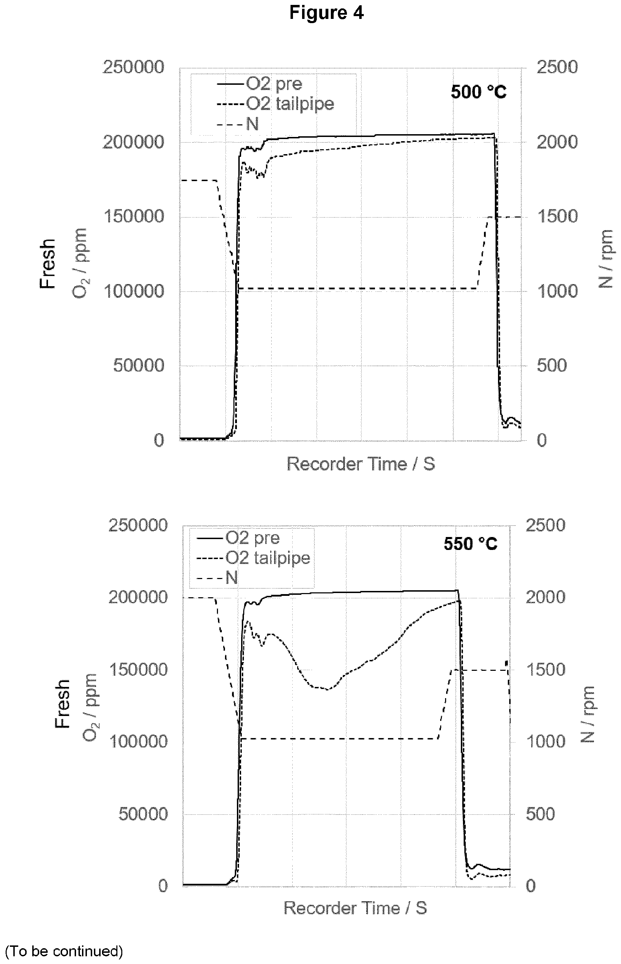

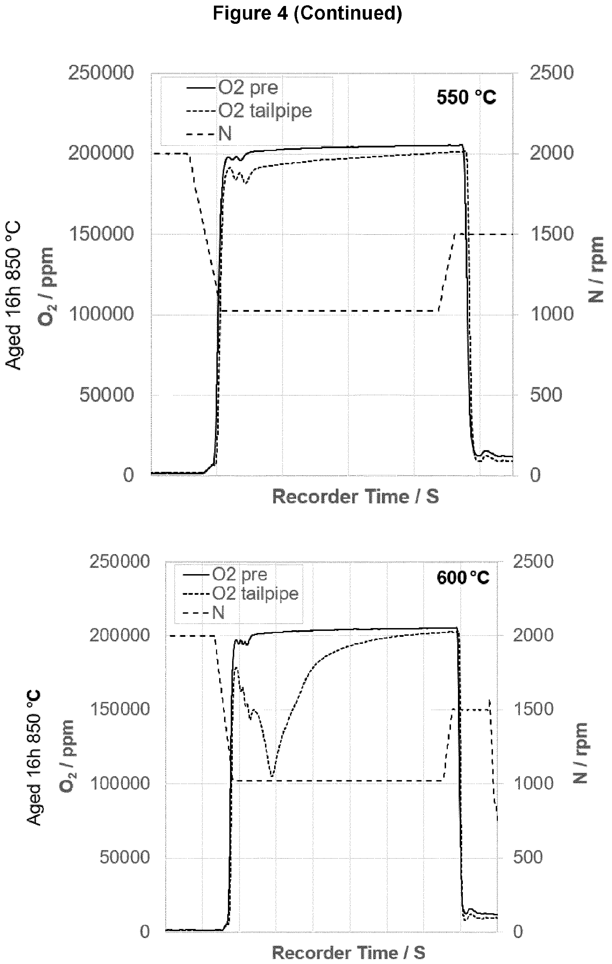

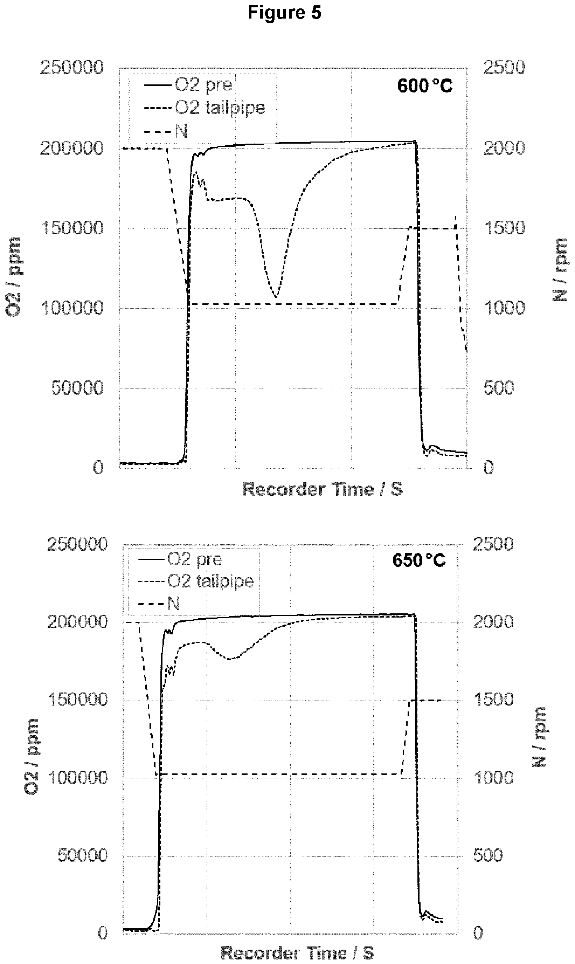

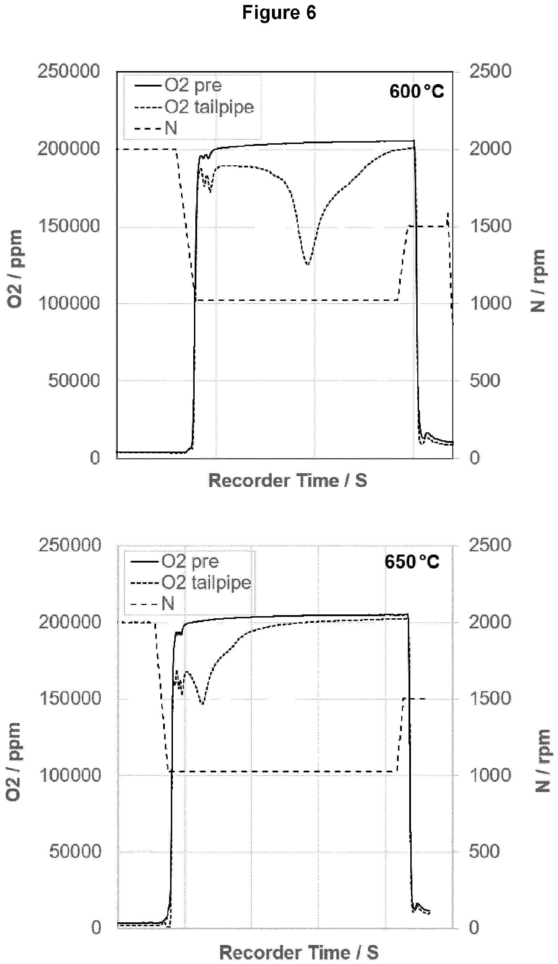

The results of the evaluation are showed in Figures 1-6.

## Claims

1. A catalyst for particulate combustion, wherein said catalyst is essentially free of platinum group metal compounds and comprising carrier and at least one metal oxides selected from iron oxide, manganese oxide or mixture thereof.

2. A catalyst for particulate combustion according to claim 1, **characterized in that** said catalyst comprising 5-90 wt.%, preferably 10-80wt.%, more preferably 30-70wt.%, most preferably 30-60 wt.% carrier, based on the calcined weight of the catalyst.

3. A catalyst for particulate combustion according to any of claims 1 or 2, **characterized in that** said catalyst comprising 0-95 wt.%, preferably 5-90wt.%, more preferably 10-70wt.%, most preferably 10-50 wt.% iron oxide, based on the calcined weight of the catalyst.

4. A catalyst for particulate combustion according to any of claims 1 to 3, **characterized in that** said catalyst comprising 0-90 wt.%, preferably 0-80wt.%, more preferably 20-60wt.%, most preferably 30-60 wt.% manganese oxide, based on the calcined weight of the catalyst.

5. A catalyst for particulate combustion according to any of claims 1 to 4, **characterized in that** said carrier is one or more of materials selected from alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria; preferably one or more of materials selected from alumina, zirconia-alumina, ceria, alumina, zirconia-alumina; more preferably alumina.

6. A catalyst for particulate combustion according to any of claims 1 to 5, **characterized in that** said catalyst comprising 10-50 wt.% iron oxide, 30-60 wt.% carrier, 20-60 wt.% manganese oxide, based on the calcined weight of the catalyst.

7. A catalyst for particulate combustion according to any of claims 1 to 6, **characterized in that** it is prepared by a process comprising the steps of:
a) providing a washcoat slurry via impregnating the surface of carrier with particles comprising iron oxide and/or manganese oxide, optionally diluting and/or mixing with one or more other components;
b) coating the pores and/or surface of the porous internal walls of the GPF with the washcoat slurry prepared in step a) and optionally dry the coated GPF under a temperature of 100-150°C; and
c) calcinating the coated GPF prepared in step b) under a temperature of 300-500 °C, preferably 350-450°C.

8. A catalyst for particulate combustion according to any of claims 1 to 6, **characterized in that** it is prepared by a process comprising the steps of:
a) providing a mixture of carrier and particles comprising iron oxide and/or manganese oxide using a slurry process, optionally mixing with one or more other components;
b) dry coating the channels and/or pores of the porous internal walls of the GPF with jet-milled mixture prepared in step a).

9. A catalyst for particulate combustion according to any of claims 1 to 6, **characterized in that** it is prepared by a process comprising the steps of:
a) providing a washcoat slurry via impregnating the surface of carrier with particles comprising iron oxide and/or manganese oxide, optionally diluting and/or mixing with one or more other components;
b) coating the pores and/or surface of the porous internal walls of the GPF with the washcoat slurry prepared in step a) and optionally dry the coated GPF under a temperature of 100-150°C, preferably coating on the surface of the porous internal walls of the outlet of GPF;
c) calcinating the coated GPF prepared in step b) under a temperature of 300-500 °C, preferably 350-450°C.
d) providing a mixture of carrier and particles comprising iron oxide and/or manganese oxide using a slurry process, optionally mixing with one or more other components; and
e) dry coating the channels and/or pores of the porous internal walls of the GPF obtained in step c) with jet-milled mixture prepared in step d), preferably the dry coating is coated in the inlet of the GPF obtained in step c).

10. A catalyst for particulate combustion according to any of claims 7 to 9, **characterized in that** D90 of said particles comprising iron oxide and/or manganese oxide is 2 to 20 µm, preferably 2 to 18 µm, more preferably 3 to 15 µm, most preferably 5 to 13 µm.

11. A catalyst for particulate combustion according to any of claims 7 to 10, **characterized in that** said GPF comprising an inlet end, an outlet end, a substrate axial length extending between the inlet end and the outlet end, and a plurality of passages defined by porous internal walls of the porous wall flow filter substrate, wherein the plurality of passages comprise inlet passages having an open inlet end and a closed outlet end, and outlet passages having a closed inlet end and an open outlet end;

12. A catalyst for particulate combustion according to any of claims 7 to 11, **characterized in that** said carrier is one or more of materials selected from alumina, zirconia-alumina, silica-alumina, lanthana, lanthana-alumina, silica-zirconialanthana, alumina-zirconia-lanthana, titania, zirconia-titania, neodymia, praseodymia, ceria-zirconia, ceria-alumina, baria-ceria-alumina and ceria; preferably one or more of materials selected from alumina, zirconia-alumina, ceria, alumina, zirconia-alumina; more preferably alumina.

13. A catalyst for particulate combustion according to any of claims 1 to 12, **characterized in that** said carrier has surface area 50-500 m²/g, preferably 100-400 m²/g, more preferably 100-200 m²/g.

14. A particulate filter for filtering out particulate present in the exhaust gases of an internal combustion engine, **characterized in that** said particulate filter comprising a catalyst according to any one of claims 1 to 13.

15. A particulate filter according to claim 14, **characterized in that** the catalyst according to any one of claims 1 to 12 is coated at the inlet channels of the particulate filter.

16. A particulate filter according to claims 14 or 15, **characterized in that** said catalyst is coated onto the particulate filter along the whole of or part of its axial length or radial direction, on alternating channels, on a wall or in a porous wall, or a combination thereof

17. A particulate filter according to any one of claims 13 to 16, wherein the particulate filter comprises a wall-flow filter comprising a honeycomb structure.

18. A particulate filter according to any one of claims 13 to 17, wherein the mean pore size of particulate filter is from 10 to 24 µm, preferably 14 to 20 µm.

19. A particulate filter according to any one of claims 13 to 18, wherein the porosity of the particulate filter is 40-65%.

20. A gasoline engine exhaust gas purification system wherein said exhaust gas purification system comprises the particulate filter according to any one of claims 13 to 19, and at least one TWC, preferably said TWC locates at close-couple position and said particulate filter locates in the downstream of said TWC.

21. A gasoline engine exhaust gas purification system according to claim 20, wherein said TWC comprising Pd, Rh and optionally Pt.
